# EUROPÄISCHE PATENTSCHRIFT

(11) **EP 2 799 502 B1**
(45) Veröffentlichungstag und Bekanntmachung des Hinweises auf die Patenterteilung: **14.09.2016**
(21) Anmeldenummer: 13166053.2
(22) Anmeldetag: 30.04.2013
(51) Int. Cl.: C09D 11/101, C09D 11/30

(54) **Strahlungshärtbare Tinte**
Radiation curable ink
Encre durcissable par rayonnement

(43) Veröffentlichungstag der Anmeldung: 05.11.2014
(73) Patentinhaber: TIGER Coatings GmbH & Co. KG, 4600 Wels (AT)
(72) Erfinder: Schmidt, Thomas, 4600 Wels (AT); Holzinger, Dieter, 4600 Wels (AT)
(74) Vertreter: Patentanwälte Barger, Piso & Partner

(56) Entgegenhaltungen:
- WO-A1-94/11123
- WO-A1-2005/040055
- WO-A2-2008/051970

## Beschreibung

Die Erfindung bezieht sich auf eine strahlungshärtbare Tinte, die polymerisierbare, ungesättigte Verbindungen wie (Meth)Acrylate, Vinylverbindungen odgl enthält.
Derlei Tinten, durch UV- oder Elektronenstrahlung härtbar, sind in unzähligen Varianten und Rezepturen bekannt und finden hauptsächlich Einsatz in Tintenstrahldruckern. Mit letzteren werden verschiedenste flächige Gebiete wie Papiere, Stoffe usw bedruckt. Bei manchen Anwendungen zeigen sich jedoch Defizite, die es auszumerzen gilt. Insbesondere bei der Gestaltung von Dekorpapieren, die zur Herstellung von Schichtverbundpressstoffen, sog. Laminaten, Einsatz finden, zeigen sich im Fertigprodukt Dekorfehler, z.B. "Aussetzer" oder "Ausblutungen", und auch Bindungsfehler.

Laminate bestehen im Allgemeinen aus Papierlagen und Harz und werden unter Hitze und Druck in Form gebracht und gehärtet. Laminat hat viele positive Eigenschaften: die Oberfläche ist dicht, schlag- und abriebresistent. Sie kann mit verschiedenen Strukturen versehen werden und hält auch hohen Temperaturen (z. B. durch Zigarettenglut und heiße Topfböden) kurzzeitig stand, ohne Schaden zu nehmen. Die Oberfläche ist leicht zu pflegen und zu reinigen, hitze- und lichtbeständig sowie geruchsneutral und unempfindlich gegen Alkohol bzw. organische Lösemittel sowie die Einwirkung von Wasserdampf und Wasser. Besonders bekannte Anwendungen für Laminat sind Fronten und Arbeitsflächen von Küchen sowie Fußböden. Holz-, Stein- und Metallimitate sowie grafische Designs verleihen den Laminaten für diese Anwendungen die passende Optik.

Die Herstellung gestalteter Laminate erfolgt über den Einsatz entsprechend gestalteter Papiere. Hierzu werden nach dem Stand der Technik entsprechende Papiere bedruckt. Bei hohen Stückzahlen gelangt der Rotationstiefdruck, bei kleinen der digitale Tintenstrahldruck zur Anwendung. Bei letzteren wird ein Druckkopf nach einer elektronischen Vorlage gesteuert und liefert das Bild nach ein- oder mehrmaligem Passieren (single pass oder multi pass) des zu bedruckenden Materials. Danach wird der Druck unmittelbar nach seiner Aufbringung fixiert, was gerade auf saugfähigen Untergründen wie Papier den Vorteil hat, dass die aufgebrachten Farben in geringerem Ausmaß in den Untergrund des Substrates wegschlagen oder auch ineinander diffundieren können, womit Drucke mit größtmöglicher Farbbrillanz und Detailschärfe zugänglich werden.

Zusammensetzungen für UV-härtbare Tinten offenbart beispielsweise die WO 02/061001 A1. Die Formulierungen enthalten zumindest ein multifunktionelles (Meth-) Acrylatmonomer, mindestens einen α,β-ungesättigten Ether, mindestens einen Photoinitiator und zumindest ein Pigment und weisen eine Viskosität kleiner 100 mPas bei 25°C auf.

Den Einsatz funktionaliserter Acrylate offenbart beispielsweise WO2010022418 (A2). Die Formulierungen enthalten Hydroxy-, Amino-, Thiol- und Epoxy-funktionelle (Meth)acrylate mit einem Gehalt von 5 % bis 70 %.

Die US 6,114,406 offenbart ferner UV-härtbare Inkjet-Tinten auf der Basis von polyfunktionellen alkoxylierten und/oder polyfunktionellen polyalkoxylierten AcrylatMonomeren, einem Photoinitiator und einem farbgebenden Stoff, vorzugsweise Pigment. Optional können die Formulierungen auch geringere Mengen nicht-alkoxylierter Monomerer, welche gegebenenfalls auch monofunktionell sein können, umfassen. Darüber hinaus können optional Tenside, Benetzungshifsmittel und Pigmentstabilisatoren zum Einsatz kommen. Die geoffenbarten Zusammensetzungen sind im Wesentlichen oder zur Gänze frei von Lösungsmitteln.

Nun hat sich jedoch gezeigt, dass die verfügbaren strahlungshärtbaren Tinten zum Gestalten von Dekorpapieren zur Herstellung von Laminaten wenig geeignet sind. Der Grund liegt darin, dass solcherart gestaltete Dekorpapiere die zur Herstellung von Laminat benötigten Harzlösungen bzw. geschmolzenes Melamin-Overlay nur noch sehr langsam und mangelhaft - wenn überhaupt - aufnehmen können. Damit wird die Herstellung der Laminate - wenn überhaupt möglich - unwirtschaftlich, die Laminate selbst mangelhaft.

Die mit den physikalisch trocknenden Tinten auf Wasserbasis auf Dekorpapier hergestellten Drucke setzen spezielle Substrateigenschaften der Papieroberfläche voraus, die ein vorhergehendes Beschichten der Papiere erfordern, und erzielen, wie schon zuvor angemerkt, nicht die Farbbrillanz und Detailschärfe, wie sie mit strahlungshärtbaren Tinten zugänglich sind. Neben einem Quellen des bedruckten Untergrundes und der damit verbundenen Passerungenauigkeit im Druckprozess, kommt es insbesondere bei der Nassimprägnierung häufig zu einem Ausbluten der gedruckten Tinten, da diese im Vergleich zu UV-härtbaren Tinten, nur sehr schlecht an den Papierfasern fixiert sind.

Die wässrigen Tinten zeigen jedoch noch eine andere Schwäche: Aufgrund des hohen wasser- bzw. Lösungsmittelgehalts neigen diese Tinten zur Schaumbildung. Gebildete Schaumbläschen unterbrechen den kontinuierlichen Fluss der Tinte und haben Aussetzer im Druckbild zur Folge. Als Konsequenz werden wässrige Tinten primär im aufwändigen Multipassverfahren eingesetzt, im Singlepass-Verfahren werden wässrige Tinten großindustriell nur mit minderer Qualität verarbeitet.

Ziel der Erfindung ist daher eine strahlungshärtbare Tinte für den Tintenstrahldruck, welche die vorgenannten Mängel der bekannten Tinten überwindet und zugleich für die Imprägnierung bedruckter Dekorpapiere mit Harzlösungen bzw geschmolzenen Overlays kein Hindernis darstellt.

Dieses Ziel wird mit einer Tinte der eingangs genannten Zusammensetzung erfindungsgemäß dadurch erreicht, dass sie mit einem Zusatz von 1 bis 20 Gew% an ungesättigten, polymerisier- und kondensierbaren Melamin-(meth)acrylaten versehen ist.

Der Zusatz solcher Melamin-(meth)acrylate erlaubt das Verpressen gedruckter Schichten mit Melaminharz-Overlays ohne Auftreten von Delamination. Des Weiteren ermöglicht er eine Nassimprägnierung gedruckter Schichten mit Melamin- bzw. Harnstoff Formaldehyd-Lösungen. Die dermaßen imprägnierten Schichten können nach Durchführung eines obligatorischen Trocknungsprozesses ebenfalls ohne Auftreten von Delamination verpresst werden. Die Verpressung des dermaßen bedruckten Substrates, wobei die applizierte Tintenmenge bis zu 15 g/m2 betragen kann, kann mit unterschiedlichen Pressverfahren wie beispielsweise dem CPL- (Continuous Pressed Laminates), dem HPL- (High Pressure Laminates) und dem LLT- (Liquid Laminate Technology) Verfahren erfolgen.

Überraschenderweise zeigte sich, dass der Einsatz bestimmter Melaminacrylate im Vergleich zum Einsatz von Verbindungen mit Hydroxy- oder Amingruppen ohne Melaminfunktionalität die Kompatibilität der Tintenschicht mit dem penetrierenden Harz stark erhöht. Hierbei zeigte sich auch, dass der Einsatz eines bifunktionellen Melaminacrylats, das einen Funktionalitätstyp enthält, der mit der Matrix der Tinte eine chemische Bindung eingehen kann (Acrylat), und einer Funktionalität, die mit dem Penetrationsharz während der Verpressung chemisch reagieren kann (freie Hydroxy- und Aminogruppen der Melaminfunktionalität), zu bevorzugen ist. Die Ausbildung chemischer Bindungen zwischen Tintenschicht und Melamin- oder Harnstoff Formaldehydharz erwies sich als unabdingbar, um die gestellten Anforderungen bezüglich Verpressbarkeit zu erfüllen.

Zusätzlich erwies es sich als vorteilhaft, wenn die erfindungsgemäße Tinte einen Zusatz von bis zu 30 Gew% an ungesättigten, hydroxyfunktionellen Vinyl- und/oder (Meth)Acrylsäureestern aufweist. Daneben kann sie in vorteilhafter Weise noch bis zu 10 Gew% an reversibel geblockten Isocyanathärtern enthalten. Diese Härter werden erst durch die Hitzeeinwirkung der Heizpresse im Zuge der Laminatherstellung aktiviert und bewirken eine zusätzliche Verfestigung der Tinte sowie ihre bessere Anbindung an die Papierfasern ebenso wie an das Laminierharz. In diesem Zusammenhang wurde gefunden, dass eine Vorerwärmung der bedruckten Substrate auf 60 °C einen positiven Effekt auf die Verpressbarkeit des Systems hat.

Weiters hat es sich als zweckmäßig erwiesen, wenn die erfindungsgemäße, strahlungshärtbare Tinte noch einen Zusatz von bis zu 10 Gew% an mehrfachfunktionellen Alkoholen, beispielsweise Glycerin, aufweist. Es wird vermutet, dass die dadurch erreichte höhere Konzentration an reaktiven Hydroxylgruppen zu einem höheren Vernetzungsgrad im Zuge des Produktionsprozesses führt, was wiederum in vielen Fällen in einer besseren Zwischenschichthaftung resultiert.

Empfehlenswert ist schließlich die Zugabe von bis zu 5 Gew% eines organo-metallischen Katalysators zur Beschleunigung der Kondensation aller kondensierbarer Bestandteile, beispielsweise Dibutylzinnlaureat oder Monobutylzinnöxid (MBTO).

Neben der weitestgehenden Ausschaltung der oben geschilderten Nachteile der gemäß Stand der Technik bisher eingesetzten strahlungshärtbaren "Inkjet"-Tinten zur Gestaltung von bei der Laminatherstellung verwendeten Dekorpapieren bringen die erfindungsgemäßen Tinten den Vorteil einer wesentlich verbesserten Benetzbarkeit gegenüber den bisher verwendeten "Inkjet"-Tinten mit sich, was auch für die Aufbringung von härtbaren Klarsicht-Harzen förderlich ist. Im Gegensatz zu der bei der Verwendung von bekannten UV-härtbaren Inkjet-Tinten auftretenden Blasenbildung in der Grenzschicht Tinte/Laminierharz ist eine solche Blasenbildung beim Einsatz der erfindungsgemäßen UV-härtbaren Inkjet-Tinten nicht zu beobachten. Überdies blockieren auf Dekorpapieren aufgebrachte erfindungsgemäße Inkjet-Tinten nicht so wie bisher bekannte Tinten ein Eindringen von Laminierharzen in das Papier, wodurch auch eine wesentliche Qualitätssteigerung insbesondere der Oberfläche von hergestellten Laminaten erzielt wird.

Die erfindungsgemäße Tinte kann weiters herkömmliche Oligomere, Pigmente, Photoinitatoren (im Falle von UV-Härtbarkeit), Pigmentstabilisatoren, Weichmacher und Haftvermittler uam enthalten.

Die Zugabe von organo-metallischen Katalysatoren kann bevorzugt in einem Bereich zwischen 0 bis 3 Gew% erfolgen. Neben zinnhältigen Katalysatoren können auch beispielsweise auf Wismut, Titan, Kobalt oder Zink basierende Katalysatoren eingesetzt werden.

Bei den erfindungsgemäßen mehrfach funktionellen Melaminacrylaten kann es sich beispielsweise um Bomar BMA 200 und Bomar BMA 222 (DYMAX), CN9890 (ARKEMA-Sartomer) handeln.

Bei den erfindungsgemäß zu verwendenden OH-funktionellen Monomeren kann es sich beispielsweise um 1,2-Ethandiolmonoacrylat (EDA), 1,2-Ethandiolmonomethacrylat (EDMA), 1,4-Butandiolmonoacrylat (BDMA) und 1,6-Hexandiolmonoacrylat (HDMA) handeln.

Bei den in den erfindungsgemäßen Formulierungen in vorteilhafter Weise zu verwendenden reversibel geblockten Isocyanathärtern handelt es sich in bevorzugter Weise um aliphatische Isocyanate. Besonders bevorzugt sind Härter, welche bei Raumtemperatur flüssig sind. Beispiele für geeignete Härter sind Desmodur® BL 3175, Desmodur® BL 3370 MPA oder Desmodur® BL 3475 BA/SN (alle BAYER) oder Vestanat® B 1358 A oder Vestanat® B 1370 (EVONIK).

Bei den Acryl- und Methacrylmonomeren als auch Vinylverbindungen sind im Rahmen der Erfindung mono- bis oligofunktionelle Verbindungen verwendbar. Die Vielfalt an verfügbaren Stoffen ist sehr groß, die nachsehende Auflistung stellt nur einen Ausschnitt daraus dar.

Beispiele für monofunktionelle (Meth-)Acrylsäureester sind: Lauryl Acrylat, Isodecyl Acrylat, Tridecyl Acrylat, Tetrahydrofurfuryl Acrylat (THFA), 2-(2-Ethoxyethoxy)Ethyl Acrylat (EOEOEA), Cyclisches Trimethylolpropan Formal Acrylat (CTFA), Isobornyl Acrylat (IBOA), C12-C14 Alkyl Methacrylat, Tetrahydrofurfuryl Methacrylat (THFMA), Polypropylen Glykol Monomethacrylat und Isobomyl Methacrylat. Bei den zu verwendenden difunktionellen (Meth-)Acrylsäureestern handelt es sich beispielsweise um Ethoxyliertes Bisphenol A Diacrylat, 1,6-Hexandiol Diacrylat (HDDA), Polyethylen Glykol 200 Diacrylat (PEG200DA), Polyethylen Glykol 400 Diacrylat (PEG400DA), Polyethylen Glykol 600 Diacrylat (PEG600DA), Tetraethylen Glykol Diacrylat (TTEGDA), Triethylen Glykol Diacrylat (TEGDA), Propoxyliertes Neopentyl Glykol Diacrylat, Esterdiol Diacrylat, Tripropylen Glykol Diacrylat (TPGDA, Ethoxyliertes Bisphenol A Diacrylat, Dipropylen Glykol Diacrylat (DPGDA), Alkoxyliertes Hexanediol 1,6-Hexandiol Diacrylat, Ethoxyliertes Bisphenol A Diacrylat, Triethylen Glykol Dimethacrylat (TIEGDMA), Ethylen Glykol Dimethacrylat (EGDMA), Tetraethylen Glykol Dimethacrylat (TTEGDMA), 1,4-Butandiol Dimethacrylat (BDDMA), Diethylen Glykol Dimethacrylat (DEGDMA), 1,6-Hexandiol Dimethacrylat (HDDMA), 1,3-Butylen Glykol Dimethacrylat (BGDMA), Ethoxyliertes Bisphenol A Dimethacrylat und Tricyclodecandimethanol Dimethacrylat. Verwendbare (Meth-) Acrylsäureester der Funktionalität 3 oder höher sind beispielsweise Ethoxyliertes Trimethylolpropan Triacrylat, Pentaerythritol Tetraacrylat (PETTA), Trimethylolpropan Triacrylat (TMPTA), Ditrimethylolpropan Tetraacrylat (DiTMPTTA), Tris(2-Hydroxyethyl)Isocyanurat Triacrylat, Dipentaerythritol Pentaacrylat (DiPEPA), Dipentaerythritol Hexaacrylat (DiPEHA), Ethoxyliertes Trimethylolpropan Triacrylat, Pentaerythritol Triacrylat, Ethoxyliertes Trimethylolpropan Triacrylat, Propoxyliertes Trimethylolpropan Triacrylat, Ethoxyliertes Pentaerythritol Tetraacrylat (PPTTA), Ethoxyliertes Trimethylolpropan Triacrylat und Trimethylolpropan Trimethacrylat (TMPTMA). Beispiele für Vinylverbindungen sind: N-Vinyl-pyrrolidone, N-Vinyl-caprolactam, N-Vinyl-imidazole, N-Vinyl-N-Methylacetamide, Ethyl vinyl ether, n-Butyl vinyl ether, iso-Butyl vinyl ether, tert.-Butyl vinyl ether, Cyclohexyl vinyl ether, 2-Ethylhexyl vinyl ether, Dodecyl vinyl ether, Octadecyl vinyl ether, 1,4-Butanediol divinyl ether, Diethyleneglycol divinyl ether, Triethyleneglycol divinyl ether, 1,4-Cyclohexanedimethanoldivinyl ether, Hydroxybutyl vinyl ether, 1,4-Cyclohexanedimethanol mono vinyl ether, 1,2,4-Trivinylcyclohexane, Vinylphosphonic acid und Vinylphosphonic acid dimethyl Ester.

Neben den hier aufgelisteten Monomeren gibt es noch zahlreiche weitere mit ähnlichem Aufbau. Sie finden sich in den Produktübersichten zahlreicher Hersteller wie Sartomer, BASF oder Rahn, welche dem Fachmann geläufig sind.

Daneben können auch polymerisationsfähige Oligomere mitverwendet werden. Diese umfassen Epoxyacrylate, aliphatische sowie aromatische Urethanacrylate, Polyesteracrylate sowie Acryloligomere.

Bei der Wahl der Monomeren und Oligomeren und ihres Mengenverhältnisses in der Formulierung ist insbesondere auf die Viskosität der resultierenden Tinte Bedacht zu nehmen. Die Viskosität der erfindungsgemäßen Tinten liegt bei Verarbeitungstemperatur - üblicherweise ca. 15 bis 80°C - vorzugsweise im Bereich von 2 bis 20 mPa·s, besonders bevorzugt im Bereich von 6 bis 12 mPa·s. Es gilt, dass Komponenten mit niedriger Funktionalität tendenziell niedrigere, Komponenten mit hoher Funktionalität tendenziell höhere Viskosität der Tinte zur Folge haben.

Im Rahmen der Erfindung geeignete Pigmente können organischer wie anorganischer Natur sein. Geeignete anorganische Pigmente umfassen zum Beispiel Titandioxid und Ruß, während geeignete organische Pigmente beispielsweise die Klassen der Phthalocyanine, Anthrachinone, Perylene, Carbazole, Monoazo- und Bisazobenzimidazolone, Isoindolinone, Monoazonaphthole, Chinacridone, Diazopyranthrone, Pyrazolone und Pyranthrone umfassen.

Beispiele kommerziell verfügbarer organischer Pigmente sind im Colour Index, Bände 1 bis 8, der Society of Dyers and Colourists, Yorkshire, England, aufgelistet, wie etwa Pigment Blau 1, Pigment Blau 15, Pigment Blau 15:1, Pigment Blau 15:2, Pigment Blau 15:3, Pigment Blau 15:4, Pigment Blau 15:6, Pigment Blau 16, Pigment Blau 24, Pigment Blau 60, Pigment Braun 5, Pigment Braun 23, Pigment Braun 25, Pigment Gelb 3, Pigment Gelb 14, Pigment Gelb 16, Pigment Gelb 17, Pigment Gelb 24, Pigment Gelb 65, Pigment Gelb 73, Pigment Gelb 74, Pigment Gelb 83, Pigment Gelb 95, Pigment Gelb 97, Pigment Gelb 108, Pigment Gelb 109, Pigment Gelb 110, Pigment Gelb 113, Pigment Gelb 128, Pigment Gelb 129, Pigment Gelb 138, Pigment Gelb 139, Pigment Gelb 150, Pigment Gelb 154, Pigment Gelb 156, Pigment Gelb 175, Pigment Grün 1, Pigment Grün 7, Pigment Grün 10, Pigment Grün 36, Pigment Orange 5, Pigment Orange 15, Pigment Orange 16, Pigment Orange 31, Pigment Orange 34, Pigment Orange 36, Pigment Orange 43, Pigment Orange 48, Pigment Orange 51, Pigment Orange 60, Pigment Orange 61, Pigment Rot 4, Pigment Rot 5, Pigment Rot 7, Pigment Rot 9, Pigment Rot 22, Pigment Rot 23, Pigment Rot 48, Pigment Rot 48:2, Pigment Rot 49, Pigment Rot 112, Pigment Rot 122, Pigment Rot 123, Pigment Rot 149, Pigment Rot 166, Pigment Rot 168, Pigment Rot 170, Pigment Rot 177, Pigment Rot 179, Pigment Rot 190, Pigment Rot 202, Pigment Rot 206, Pigment Rot 207, Pigment Rot 224, Pigment Violett 19, Pigment Violett 23, Pigment Violett 32, Pigment Violett 37, Pigment Violett 42, Pigment Schwarz 6 und Pigment Schwarz 7.

Die Pigmente werden üblicherweise über Vermahlen in ausgewählten reaktiven Monomeren und/oder Oligomeren in die Formulierungen eingebracht. Ein Zusatz von Dispergier- und Benetzungshilfen vermag oft die Vermahlleistung zu steigern und die durch den Mahlprozess de-agglomerierten Pigmente zu stabilisieren. Geeignete derartige Additive sind beispielsweise unter den Handelsbezeichnungen SOLSPERSE^{®} (The Lubrizol Corporation), EFKA^{®} (BASF), TEGO (Evonik) und BYK (Byk Chemie) erhältlich. Die Menge an zugesetzter Dispergierhilfe richtet sich nach der Art und Menge des verwendeten Pigmentes und beträgt bei organischen Pigmenten ca. 20 bis 100%, bei anorganischen Pigmenten ca. 5 bis 80%, jeweils bezogen auf die Menge des Pigmentes.

Sollen die Tinten mittels UV-Strahlung gehärtet werden, müssen die Formulierungen auch Photoinitiatoren enthalten. Besonders bevorzugte Photoinitiatoren sind unter anderen jene aus den Klassen der Acylphosphinoxide und Acylphosphonate, gut geeignete Vertreter sind beispielsweise bis(2,4,6-Trimethylbenzoyl)-phenylphosphinoxid, bis(2,6-Dimethoxybenzoyl)-2,4,4-trimethyl-pentylphosphinoxid, daneben weiters 1-Hydroxy-cyclohexylphenylketon, 2-Methyl-1-[4-(methylthio)phenyl]-2-morpholinopropen-1-on und 2-Hydroxy-2-methyl-1-phenylpropan-1-on. Diese Verbindungen sind beispielsweise unter den Handelsbezeichnungen Speedcure (Lambson), Irgacure^{®}, Darocur^{®}, Lucerin^{®} (BASF) oder Genocure (RAHN) erhältlich. Die bevorzugten Zugabemengen liegen im Bereich von 1 bis 10, besonders bevorzugt im Bereich von 2 bis 8 Gewichtsprozenten, bezogen auf das Gesamtgewicht der Formulierung. Auch die Wahl des Photoinitiators hängt stark von Art und Menge des verwendeten Pigmentes ab; es ist vorteilhaft, wenn Pigment(e) und Photoinitiator(en) nicht bei denselben Wellenlängen absorbieren.

Co-Initiatoren und Amin-Synergisten können verwendet werden, um die Härtungsrate zu verbessern, Beispiele hierfür sind Isopropylthioxanthon, Ethyl-4-(dimethylamino)benzoat und Dimethylaminoethylmethacrylat.

Als Additive können weiters Weichmacher Anwendung finden. Neben den Monomeren haben sie erheblichen Einfluss auf die Festigkeit des gehärteten Druckauftrages. Im Rahmen der gegenständlichen Erfindung können alle dem Stande der Technik gemäßen Weichmacher verwendet werden. Wichtige Klassen sind Alkylester aromatischer (Poly-) Carbonsäuren wie beispielsweise Benzoesäure, Ortho-, Tere- und Isophthalsäure sowie Trimellitsäure, weiters Alkylester aliphatischer Di- und Polycarbonsäuren wie Adipin-, Bernstein-, Sebacin- sowie Citronensäure. Weitere wichtige Weichmacher sind Alkylsowie Arylester der Phosphorsäure wie beispielsweise Tributyl- oder Trikresylphosphat.

Die erfindungsgemäßen Formulierungen werden durch Zusammenbringen der betreffenden Komponenten hergestellt, durch Mischen, Rühren, Vermahlen und sonstige Methoden, die geeignet sind, homogene Zusammensetzungen hervorzubringen.

Die fertigen Formulierungen können anschließend über Tintenstrahldrucker nicht nur im multi-pass-, sondern insbesondere auch im single-pass- Verfahren appliziert und anschließend durch UV- oder Elektronenstrahlung vernetzt werden.

Die Erfindung wird anhand der nachfolgenden Beispiele näher erläutert, ohne sie auf den Umfang der Beispiele zu reduzieren. Dem Fachmann ist es ein Leichtes, die Beispiele im Rahmen der Erfindung abzuwandeln und spezifischen Erfordernissen anzupassen. Die verwendete Mahlpaste setzte sich aus folgenden Bestandteilen zusammen: 25 % Pigment (beispielsweise Pigment Blue 15:3), 10 % Disperbyk 162, 30 % PONPGDA, 35 % PEOA. Die Vermahlung der Paste erfolgte auf einer Kugelmühle, bis der gewünschte Partikeldurchmesser erreicht wurde.

In den nachstehenden Tabellen 1 und 2 sind die Tintenbestandteile jeweils links von oben nach unten und die einzelnen Versuchschargen in der Kopfzeile angeführt. Die Mengenangaben sind in Gew%.

**Tabelle 1: Beispielformulierungen Teil 1**

| | V | IJ1 | U2 | IJ3 | IJ4 | IJ5 | IJ6 |
|---|---|---|---|---|---|---|---|
| POEA | 58,7 | 55,7 | 40,7 | 43,7 | 25,7 | 32,7 | 26,7 |
| PONPGDA | 5 | 5 | 5 | 5 | 5 | 5 | 5 |
| Irgacure 184 | 3 | 3 | 3 | 3 | 3 | 3 | 3 |
| Irgacure 819 | 3 | 3 | 3 | 3 | 3 | 3 | 3 |
| NVC | 20 | 20 | 20 | 20 | 20 | 20 | 20 |
| NPAL | 0,3 | 0,3 | 0,3 | 0,3 | 0,3 | 0,3 | 0,3 |
| Mahlpaste | 10 | 10 | 10 | 10 | 10 | 10 | 10 |
| Bomar BMA 200 | 0 | 3 | 18 | 5 | 5 | 5 | 5 |
| BDMA | 0 | 0 | 0 | 10 | 28 | 20 | 20 |
| Desmodur® BL 3175 | 0 | 0 | 0 | 0 | 0 | 1 | 7 |
| Glycerin | 0 | 0 | 0 | 0 | 0 | 0 | 0 |
| MBTO | 0 | 0 | 0 | 0 | 0 | 0 | 0 |
| Summe | 100 | 100 | 100 | 100 | 100 | 100 | 100 |

**Tabelle 2: Beispielformulierungen Teil 2**

| | IJ7 | IJ8 | IJ9 | IJ10 | IJ11 | IJ12 | IJ13 |
|---|---|---|---|---|---|---|---|
| POEA | 29,7 | 21,7 | 29,2 | 25,7 | 46,7 | 46,7 | 34,2 |
| PONPGDA | 5 | 5 | 5 | 5 | 5 | 5 | 5 |
| Irgacure 184 | 3 | 3 | 3 | 3 | 3 | 3 | 3 |
| Irgacure 819 | 3 | 3 | 3 | 3 | 3 | 3 | 3 |
| NVC | 20 | 20 | 20 | 20 | 20 | 20 | 20 |
| NPAL¹⁾ | 0,3 | 0,3 | 0,3 | 0,3 | 0,3 | 0,3 | 0,3 |
| Mahlpaste | 10 | 10 | 10 | 10 | 10 | 10 | 10 |
| Bomar BMA 200 | 5 | 5 | 5 | 5 | 5 | 5 | 0 |
| BDMA | 20 | 20 | 20 | 20 | 0 | 0 | 20 |
| Desmodur® BL 3175 | 3 | 3 | 3 | 3 | 7 | 3 | 3 |
| Glycerin | 1 | 9 | 1 | 1 | 0 | 1 | 1 |
| MBTO | 0 | 0 | 0,5 | 4 | 0 | 3 | 0,5 |
| Summe | 100 | 100 | 100 | 100 | 100 | 100 | 100 |

| | | | | | | | |
|---|---|---|---|---|---|---|---|
| ¹⁾NPAL = (Tris(N-nitroso-N-phenylhydroxylamin) Aluminiumsalz | | | | | | | |

Nach dem Bedrucken der Papiere mit den jeweiligen Chargen wurden aus ihnen Prüfstücke geschnitten und auf der mit Inkjet-Tinte versehenen Seite mit wässriger Melaminharzlösung in Kontakt gebracht. Gemessen wurde die Zeit in Sekunden bis zur völligen Penetration der Harzlösung durch die Papierschicht. Bei der anschließenden Laminierung wurden gedruckte Schichten mit Overlay bzw. gedruckte und imprägnierte Schichten ohne Overlay im CPL Prozess und LLT-Verfahren mittels Kurztaktpressen bzw. Doppelbandpressen (200 °C, 40 bar, 12 Sekunden) bzw. im HPL Prozess mittels Etagenpressen (125 °C, 75 bar, 100 Minuten) verpresst.

In der nachfolgenden Tabelle 3 sind die diversen Versuchsergebnisse angeführt. Die Werte der Penetrationsdauer wurden im Doppelversuch ermittelt, die Verpressresultate mittels Kurztakt- bzw Doppelbandpressen sowie Etagenpressen dargestellt. Ergänzend sind die Ergebnisse der Gitterschnitt- und Kochtests aufgeführt.

**Tabelle 3: Übersicht über die erzielten Testergebnisse**

| | | Kurztakt- & Doppelbandpressen | | | Etagenpressen | | |
|---|---|---|---|---|---|---|---|
| Bezeichnung | Penetrationsdauer (Flüssigharz) | Blasenbildung | Gitterschnitttest | Kochtest | Blasenbildung | Gitterschnitttest | Kochtest |
| V | 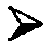 1 min | ja | n.d. | n.d. | Ja | n.d. | n.d. |
| IJ1 | 12 sec | nein | Gt3 | - | nein | Gt 3 | - |
| IJ2 | 8 sec | nein | Gt1 | + | nein | Gt 2 | + |
| IJ3 | 6 sec | nein | Gt1 | + | nein | Gt 1 | + |
| IJ4 | 4 sec | nein | Gt1 | + | nein | Gt1 | + |
| IJ5 | 4 sec | nein | Gt 0 | ++ | nein | Gt 0 | + |
| IJ6 | 4 sec | nein | Gt 0 | ++ | nein | Gt 0 | ++ |
| IJ7 | 3 sec | nein | Gt 0 | ++ | nein | Gt 0 | ++ |
| IJ8 | 3 sec | nein | Gt 0 | ++ | nein | Gt 0 | ++ |
| IJ9 | 3 sec | nein | Gt 0 | +++ | nein | Gt 0 | +++ |
| IJ10 | 3 sec | nein | Gt 0 | +++ | nein | Gt 0 | +++ |
| IJ11 | 8 sec | nein | Gt0 | + | nein | Gt1 | + |
| IJ12 | 7 sec | nein | Gt0 | ++ | nein | Gt0 | + |
| IJ13 | 12 sec | ja | n.d. | n.d. | ja | n.d. | n.d. |

| | | | | | | | |
|---|---|---|---|---|---|---|---|
| Legende: Blasenbildung: ja/nein Gitterschnitttest (EN ISO 2409): Gt 5 (vollständige Ablösung) - Gt 0 (vollständige Haftung) Kochtest (entnommen aus EN12721): - (Blasenbildung, Delamination); + bis +++ (keinerlei Blasenbildung & Delamination mit von + zu +++ steigender Güte) n.d... nicht durchgeführt. | | | | | | | |

Der Vergleich der Penetrationszeiten zeigt klare Vorteile für die erfindungsgemäßen Tinten (IJ1 bis IJ12) gegenüber den Formulierungen V sowie IJ13, welche den Stand der Technik repräsentieren und keinen Anteil an Melamin-(meth)acrylat enthalten. Der Vorteil der kurzen Penetrationszeiten für die erfindungsgemäßen Inkjet-Tinten geht aber über die relative Steigerung des Papierdurchsatzes im Zuge des Tränkprozesses hinaus. Kurze Tränkzeiten verhindern, dass die Feuchtigkeit das Innere der Fasern erreicht, und helfen so, die Papierbahnen formstabil zu halten, was eine Grundvoraussetzung für ein störungsfreies maschinelles Tränken ist.

Bei der anschließenden Verpressung zeigten gedruckte Schichten mit den erfindungsgemäßen Formulierungen (IJ1 bis IJ12) im CPL-Prozess und LLT-Verfahren mittels Kurztaktpressen bzw Doppelbandpressen (200 °C, 40 bar, 12 Sekunden) bzw im HPL-Prozess mittels Etagenpressen (125 °C, 75 bar, 100 Minuten) vollständige Laminierbarkeit ohne Blasenbildung. Bei den durchgeführten Gitterschnittpüfungen und den Kochtests wurden in Abhängigkeit von den eingesetzten Formulierungen unterschiedliche Ergebnisse erzielt.

Die gleichen Tinten wurden auch ohne Imprägnierung mit Melamin-Overlay trocken verpresst, wobei sich bezüglich der erzielten Ergebnisse ein ähnliches Bild zeigte. Während bei den Vergleichsmustern großflächig Delamination und Blasenbildung auftrat, zeigte sich bei den erfindungsgemäßen Formulierungen keine Blasenbildung. Die nachfolgenden Gitterschnitt- und Kochtests wurden bestanden, zeigten jedoch unterschiedliche Ergebnisse in Abhängigkeit von den eingesetzten Formulierungen.

## Patentansprüche

1. Strahlungshärtbare Tinte für den Tintenstrahldruck, die polymerisierbare, ungesättigte Verbindungen und 1 bis 20 Gew% an ungesättigten, polymerisier- und kondensierbaren Melamin-(meth)acrylaten enthält, **gekennzeichnet durch** einen Zusatz von 1 bis 10 Gew% an reversibel geblockten Isocyanathärtern und 1 bis 10 Gew% an mehrfachfunktionellen Alkoholen,

2. Strahlungshärtbare Tinte nach Anspruch 1, **gekennzeichnet durch** einen Zusatz von bis zu 30 Gew% an ungesättigten, hydrofunktionellen Vinyl- und/oder (Meth)Acrylsäureestern.

3. Strahlungshärtbare Tinte nach Anspruch 1 oder 2, **gekennzeichnet durch** Zugabe von bis zu 5 Gew% eines organo-metallischen Katalysators zur Beschleunigung der Kondensation aller kondensierbarer Bestandteile,

## Claims

1. Radiation-curable ink for an ink-jet printer containing polymerisable, unsaturated compounds, and 1 to 20 wt.% unsatured, polymerisable and condensable melamine (meth)acrylates, **characterised by** the addition of up to 10 wt.% reversibly blocked isocyanate curing agents and 1 to 10 wt.% multifunctional alcohols.

2. Radiation-curable ink according to claim 1, **characterised by** the addition of up to 30 wt.% unsaturated, hydroxy-functional vinyl and/or (meth)acrylic acid esters.

3. Radiation-curable ink according to claim 1 or 2, **characterised by** the addition of up to 5 wt.% of an organometallic catalyst for accelerating the condensation of all condensable components.

## Revendications

1. Encre durcissable par irradiation pour impression par jet d'encre, qui contient des composés insaturés polymérisables et 1 à 20 % en poids d'acrylates ou méthacrylates de mélamine insaturés, polymérisables et condensables, **caractérisée en ce qu'**elle contient en outre de 1 à 10 % en poids de durcisseurs de type isocyanate bloqué réversible et de 1 à 10 % en poids de polyols.

2. Encre durcissable par irradiation, conforme à la revendication 1, **caractérisée en ce qu'**elle contient en outre jusqu'à 30 % en poids d'esters insaturés et hydroxylés, de vinyle et/ou d'acide acrylique ou méthacrylique.

3. Encre durcissable par irradiation, conforme à la revendication 1 ou 2, **caractérisée en ce qu'**elle contient en outre jusqu'à 5 % en poids d'un catalyseur organo-métallique, pour accélérer la condensation de tous les constituants condensables.
